# EUROPEAN PATENT SPECIFICATION

(11) **EP 1 833 917 B1**
(45) Date of publication and mention of the grant of the patent: **30.09.2009**
(21) Application number: 05820222.7
(22) Date of filing: 15.12.2005
(51) Int. Cl.: C08L 83/06, C08K 5/5435

(54) **SILICONE RESIN COMPOSITION, CURABLE RESIN COMPOSITION, AND CURED RESIN**
SILIKONHARZZUSAMMENSETZUNG, HÄRTBARE HARZZUSAMMENSETZUNG UND GEHÄRTETES HARZ
FORMULE DE RESINE SILICONE, FORMULE DE RESINE DURCISSABLE, ET RESINE DURCIE

(30) Priority: 05.01.2005 JP 2005001015
(43) Date of publication of application: 19.09.2007
(73) Proprietor: Dow Corning Toray Co., Ltd., Tokyo 100-0005 (JP)
(72) Inventor: MORITA, Yoshitsugu, Dow Corning Toray Co., Ltd., Ichihara-shi, Chiba 2990108 (JP); UEKI, Hiroshi, Dow Corning Toray Co., Ltd., Ichihara-shi, Chiba 2990108 (JP); FURUKAWA, Haruhiko, Dow Corning Toray Co., Ltd., Ichihara-shi, Chiba 2990108 (JP)
(74) Representative: Gillard, Richard Edward
(86) International application number: PCT/JP2005/023445
(87) International publication number: WO 2006/073056

(56) References cited:
- WO-A-03/072656
- PATENT ABSTRACTS OF JAPAN vol. 018, no. 597 (C-1273), 15 November 1994 (1994-11-15) & JP 06 220778 A (KANEBO LTD), 9 August 1994 (1994-08-09)

## Description

### Technical Field

The present invention relates to a silicone resin composition, curable resin composition, and a cured resin. More specifically, the invention relates to the following:
a silicone resin composition that is characterized by low melt viscosity and good dispersibility in and high reactivity to organic resins; a curable resin composition that possesses good moldability, is capable of forming a cured resin with excellent flame resistance, and does not produce a harmful influence on the environment and human health since it is free of halogenated epoxy resin and antimony-type oxide; and a cured resin with excellent flame resistance that is also characterized by low influence on the environment and human health.

### Background Art

As disclosed in Japanese Unexamined Patent Application Publication No. (hereinafter referred to as "Kokai") H6-298940, it is possible to prepare a silicone resin with a required molecular weight, softening point and glass transition point by combining siloxanes or silanes as raw materials and by providing specific reaction conditions. However, it is difficult to provide accurate control of the melt viscosity of the aforementioned silicone resin, as well as to control dispersibility and reactivity thereof when it is combined with organic resins.

On the other hand, it is known that curable resin compositions may form cured resins characterized by excellent dielectric properties, volumetric resistivity, insulation resistance or other electrical properties, as well as by improved bending strength, compression strength, impact strength, or other mechanical properties. Nevertheless, in order to improve flame resistance of these resins, they must incorporate halogen-containing compounds, antimony trioxides, or similar antimony-type compounds, which is undesirable because they produce toxic antimony oxide dust and toxic gases during burning which are harmful to human health and to the environment.

As has been shown in Kokai H6-298897, the addition of a silicone resin to a curable resin improves such properties of the resin as flowability prior to curing, flexibility, and resistance to moisture and heat shock. Furthermore, as disclosed in Kokai H11-222559 and Kokai H11-323086, the addition of silicone resin to a curable resin improves flame resistance of the resin. However, the problem associated with the curable resin composition disclosed in Kokai H6-298897 consists of insufficient flame-resistant properties in the obtained cured resin, while the curable resin compositions of Kokai H11-222559 and Kokai H11-323086 encounter a problem associated with contamination of a mold during the molding process.

Kokai 2003-253122 discloses a method for improving mechanical properties and compounding properties in the preparation of a curable resin by combining silicone resin with an epoxy-containing silicone resin. However, the effect of this method is insufficient.

It is an object of the present invention to provide a silicone resin composition that is characterized by low melt viscosity and improved dispersibility in, and reactivity to, organic resins. It is another object to provide a curable resin composition that is characterized by improved moldability, ability to form cured resins with excellent flame-resistant properties, and by reduced influence on human health and environment because this curable resin is free from halogenated epoxy resins and antimony compounds. It is a further object to provide a cured resin which has low influence on human health and environment and possesses improved flame-resistance properties.

### Disclosure of Invention

A silicone resin composition of the invention comprises a mixture or a reaction mixture of the following components:
(A) a silicone resin having a softening point above 25°C and represented by the following average unit formula:

   (R¹SiO_{3/2})ₐ(R²₂SiO_{2/2})_{b}(R³₃SiO_{1/2})_{c}(SiO_{4/2})_{d}(XO_{1/2})ₑ

   {where R¹, R², and R³ designate identical or different univalent hydrocarbon groups or epoxy-containing organic groups, of the total number of R¹, R², and R³ in the molecule, 0.1 to 40 mole % comprises epoxy-containing organic groups and not less than 10 mole % comprises phenyl groups; X is hydrogen atom or an alkyl group; "a" is a positive number, "b" is 0 or a positive number; "c" is 0 or a positive number; "d" is 0 or a positive number; "e" is 0 or a positive number; "b/a" is a number within the range of 0 to 10; "c/a" is a number within the range of 0 to 0.5; "d/(a+b+c+d)" is a number within the range of 0 to 0.3; and "e/(a+b+c+d)" is a number within the range of 0 to 0.4} and
(B) an epoxy-containing alkoxysilane.

The curable resin composition of the invention comprises (I) a curable resin and (II) the aforementioned silicone resin composition.

Furthermore, the cured resin of the invention is the one obtained by curing the aforementioned curable resin composition.

### Effects of Invention

The silicone resin composition of the invention is characterized by low melt viscosity and improved dispersibility in, and reactivity to, organic resins. Furthermore, the curable resin composition of the invention is characterized by improved moldability, ability to form cured resin with excellent flame-resistant properties, and by reduced influence on human health and environment since it is free of such harmful components as halogenated epoxy resin and antimony compounds. Furthermore, the cured resin of the invention is characterized by reduced influence on human health and environment as well as by improved flame-resistant properties.

### Detailed Description of the Invention

The following is a more detailed description of the silicone resin composition of the invention.

Component (A) is a silicone resin represented by the following average unit formula:

(R¹SiO_{3/2})ₐ (R²₂SiO_{2/2})_{b} (R³₃SiO_{1/2})_{c} (SiO_{4/2})_{d} (XO_{1/2})ₑ

and having a softening point above 25°C. In this formula, R¹, R², and R³ may be the same or different and may represent univalent hydrocarbon groups or epoxy-containing organic groups. The univalent hydrocarbon groups can be exemplified by methyl, ethyl, propyl, butyl, pentyl, hexyl, heptyl, or similar alkyl groups; vinyl, allyl, butenyl, pentenyl, hexenyl, or similar alkenyl groups; phenyl, tolyl, xylyl, naphthyl, or similar aryl groups; benzyl, phenethyl, or similar aralkyl groups; chloromethyl, 3-chloropropyl, 3,3,3-trifluoropropyl, nonafluorobutyl ethyl, or similar halogenated alkyl groups. The epoxy-containing organic groups can be exemplified by 2,3-epoxypropyl, 3,4-epoxybutyl, 4,5-epoxypentyl, or similar epoxyalkyl groups; 2-glycidoxyethyl, 3-glycidoxypropyl, 4-glycidoxybutyl, or similar glycidoxyallcyl groups; 2-(3,4-epoxycyclohexyl) ethyl, 3-(3,4-epoxycyclohexyl) propyl, or similar epoxycyclohexyl alkyl groups. Of the total number of R¹, R², and R³ in the molecule, 0.1 to 40 mole % comprises epoxy-containing organic groups. If the content of the epoxy-containing organic groups is less than the abovementioned lower limit when the obtained composition is mixed with an organic resin, bleeding may occur during molding, and the molded product will have low flexibility and low resistance to moisture and heat shock. On the other hand, if the amount exceeds the abovementioned upper limit, this may impair the mechanical properties of the molded product. From the point of view of improved affinity for organic resins, the amount of phenyl groups should be 10 mole % or more per total amount of groups designated as R¹, R², and R³. In particular, preferably, phenyl groups should comprise not less than 10 mole % of R¹, and even more preferably, phenyl groups should comprise not less than 30 mol % of R¹. In the above formula, X designates a hydrogen atom or an alkyl group such as a methyl, ethyl, propyl, butyl, pentyl, hexyl, or a heptyl group.

In the above formula, "a" is a positive number, "b" is 0 or a positive number; "c" is 0 or a positive number; "d" is 0 or a positive number; "e" is 0 or a positive number; "b/a" is a number within the range of 0 to 10; "c/a" is a number within the range of 0 to 0.5; "d/(a+b+c+d)" is a number within the range of 0 to 0.3; and "e/(a+b+c+d)" is a number within the range of 0 to 0.4. If "b/a" exceeds 10, the silicone resin will be either obtained with a softening point not greater than 25°C or will have reduced affinity for organic resins. Furthermore, if "d/(a+b+c+d)" exceeds 0.3, this will reduce dispersibility of silicone resin in organic resins.

There are no special restrictions with regard to the weight-average molecular weight of component (A), and it may be within the range of 500 to 50,000, and preferably 500 to 10,000. Also, there is no special restrictions with regard to the softening point of component (A), provided that it is above 25°C, preferably between 40 and 250°C, and even more preferably between 40 and 150°C. If the softening point of the silicone resin is below the recommended lower limit, the resin will be subject to bleeding during molding of the organic resin that contains the silicone resin, and thus will contaminate the mold or will impair mechanical properties of the molded product. If, on the other hand, the softening point of the silicone resin exceeds the upper limit, it will be difficult to uniformly disperse it in the organic resin.

There are no special restrictions with regard to a method suitable for the preparation of a silicone resin of component (A). For example, it can be obtained by causing a reaction between constituents (A') and (A"), where the constituent (A') is a silane or siloxane composed of at least one type of units represented by the following unit formulae: (i) R⁴SiO_{3/2} (where R⁴ is a univalent hydrocarbon group); (ii) R⁵₂SiO_{2/2} (where R⁵ may be the same or different univalent hydrocarbon groups); (iii) R⁶₃SiO_{1/2} (where R⁶ may be the same or different univalent hydrocarbon groups); and (iv) SiO_{4/2}, or a mixture of two or more of the aforementioned silanes or siloxanes, and where the constituent (A") is an epoxy-containing alkoxysilane represented by the formula given below or by a product of its partial hydrolysis: R⁷R⁸_{f}Si(OR⁹)_{(3-f)} (where R⁷ is an epoxy-containing organic group, R⁸ is a univalent hydrocarbon group, R⁹ is an alkyl group, and "f" is 0,1, or 2), the reaction being carried out in the presence of a basic catalyst.

In the above-described method, constituent (A') is a main raw material which is a silane or siloxane composed of at least one type of units selected from the units represented by the aforementioned formulae (i) through (iv), or a mixture of two or more of the aforementioned silanes or siloxanes. Such constituent (A') may be a silane or siloxane composed only of units (i), a silane or siloxane composed only of unit (ii), a silane or siloxane composed only of unit (iii), a silane or siloxane composed only of unit (iv), a siloxane composed of units (i) and (ii), a siloxane composed of units (i) and (iii), a siloxane composed of units (i) and (iv), a siloxane composed of units (i), (ii), and (iii), a siloxane composed of units (i), (ii) and (iv), and a siloxane composed of units (i), (ii), (iii), and (iv). In the above formulae, R⁴, R⁵, and R⁶ may be the same or different and may represent univalent hydrocarbon groups and may be exemplified by the same univalent hydrocarbon groups as previously mentioned examples of R¹, R², or R³. It is recommended that 10 mole % or more, and preferably 30 mole % or more of R⁴'s be comprised of phenyl groups.

The aforementioned silanes or siloxanes of constituent (A') may be exemplified by methyltrimethoxysilane, methyltriethoxysilane, ethyltrimethoxysilane, ethyltriethoxysilane, vinyltrimethoxysilane, phenyltrimethoxysilane, 3,3,3 -trifluoropropyl trimethoxysilane, dimethyldimethoxysilane, methylphenyl dimethoxysilane, methylvinyl dimethoxysilane, diphenyldimethoxysilane, dimethyldiethoxysilane, methylphenyl diethoxysilane, tetramethoxysilane, tetraethoxysilane, tetrapropoxysilane, dimethoxydiethoxysilane, or products of hydrolysis of the above.

In the above method, constituent (A") is used for introduction of epoxy-containing organic groups. It is an epoxy-containing alkoxysilane of general formula: R⁷R⁸_{f}Si(OR⁹)_{(3-f)} or a product of its partial hydrolysis. In this formula, R⁷ is an epoxy-containing organic group that may be exemplified by the same epoxy-containing organic groups as those given for R¹, R², or R³. Furthermore, R⁸ designates a univalent hydrocarbon group that also may be the same as those exemplified earlier for R¹, R², or R³. R⁹ is an alkyl group such as a methyl, ethyl, propyl, butyl, pentyl, hexyl, or a heptyl group. In the above formula, "f" is 0, 1 or 2 and preferably 0.

The following are specific examples of epoxy-containing alkoxysilane: 3-glycidoxypropyl (methyl) dimethoxysilane, 3-glycidoxypropyl (methyl) diethoxysilane, 3-glycidoxypropyl (methyl) dibutoxysilane, 2-(3,4-epoxycyclohexyl) ethyl (methyl) dimethoxysilane, 2-(3,4-epoxycyclohexyl) ethyl (phenyl) diethoxysilane, 2,3-epoxypropyl (methyl) dimethoxysilane, 2,3-epoxypropyl (phenyl) dimethoxysilane, 3-glycidoxypropyl trimethoxysilane, 3-glycidoxypropyl triethoxysilane, 3-glycidoxypropyl tributoxysilane, 2-(3,4-epoxycyclohexyl) ethyl trimethoxysilane, 2-(3,4-epoxycyclohexyl) ethyl triethoxysilane, 2,3-epoxypropyl trimethoxysilane, and 2,3-epoxypropyl triethoxysilane.

The aforementioned manufacturing method consists of reacting constituents (A') and (A") in the presence of a basic catalyst. Such a catalyst may be the one used for cohydrolyzation of constituents (A') and (A"), for causing a condensation reaction, or for causing an equilibrium reaction between the constituents (A') and (A"). For example, this may be sodium hydroxide, potassium hydroxide, cesium hydroxide, or a similar alkali metal hydroxide; sodium-tert-butoxide, potassium-tert-butoxide, cesium-tert-butoxide, or a similar alkali metal alkoxide; sodium silanolate compound, potassium silanolate compound, and cesium silanolate compound, or a similar alkali metal silanolate compound. Potassium- and cesium-type basic catalysts are preferable. If necessary, for causing cohydrolyzation or condensation of constituents (A') and (A"), water can be added. If necessary, upon completion of the reaction between constituents (A') and (A"), the concentration of solid components in the reaction system can be adjusted by means of an organic solvent, or the reaction may be continued.

When the method of the invention is carried out with the use of an equilibrium reaction, it means that siloxane bonds are broken and reconnected again at random, whereby the obtained epoxy-containing silicone resin arrives at an equilibrium condition. When this reaction is carried out at a low temperature, it is difficult to provide sufficient progress of the equilibrium reaction, but if the temperature is too high, this may lead to decomposition of silicon-bonded organic groups. Therefore, the preferable temperature is within the range of 80 to 200°C, preferably 100 to 150°C. Selection of an organic solvent that has a boiling temperature within the range of 80 to 200°C will facilitate conducting of an equilibration reaction at a refluxing temperature. The equilibrium reaction can be stopped by neutralizing the basic catalyst. This can be achieved by adding gaseous carbon dioxide or a weak acid such as carboxylic acid. Salts created due to neutralization can be simply removed by filtering or washing with water.

Component (B) is an epoxy-containing alkoxy silane which is used for improving solubility of the silicone resin composition in organic resins. Component (B) can be exemplified by the following compounds: 3-glycidoxypropyl (methyl) dimethoxysilane, 3-glycidoxypropyl (methyl) diethoxysilane, 3-glycidoxypropyl (methyl) dibutoxysilane, 2-(3,4-epoxycyclohexyl) ethyl (methyl) dimethoxysilane, 2-(3,4-epoxycyclohexyl) ethyl (phenyl) diethoxysilane, 2,3-epoxypropyl (methyl) dimethoxysilane, 2,3-epoxypropyl (phenyl) dimethoxysilane, 3-glycidoxypropyl trimethoxysilane, 3-glycidoxypropyl triethoxysilane, 3-glycidoxypropyl tributoxysilane, 2-(3,4-epoxycyclohexyl) ethyl trimethoxysilane, 2-(3,4-epoxycyclohexyl) ethyl triethoxysilane, 2,3-epoxypropyl trimethoxysilane, and 2,3-epoxypropyl triethoxysilane. From the viewpoint of easy procurement, 3-glycidoxypropyl trimethoxysilane is preferable.

There are no special restrictions with regard to the amount in which component (B) can be added to the silicone resin composition of the invention, but, in general, it should be used in an amount of 0.15 to 100 parts by weight per 100 parts by weight of component (A). If it is used in an amount less than the recommended lower limit, this may impair dispersibility of the silicone resin composition in organic solvents. If, on the other hand, it is used in an amount exceeding the recommended upper limit, the obtained silicone resin can become liquid, and this will impair moldability of the organic resin that contains this composition.

There are no special restrictions with regard to the method of preparation of the silicone resin composition of the invention. For example, it can be prepared by mixing components (A) and (B) in a molten state, or by first mixing component (B) with an organic solvent solution of component (A) and then removing the organic solvent. The mixing operation can be carried out in a single-shaft or double-shaft-type continuous mixer, two-roll-type mill, Ross mixer®, kneader mixer, or a mixer equipped with a vacuum apparatus for removal of solvents. Organic solvents suitable for the above purposes may be represented by toluene, xylene, or similar aromatic hydrocarbons; acetone, methylethylketone, or similar ketone-type solvents.

There are no special restrictions with regard to the melt viscosity of the silicone resin composition at 100°C, but it is recommended to be 5 x 10⁴ mPa·s or below. Also, there are no restrictions with regard to the melt viscosity of the silicone resin composition at 140°C, but it is preferably 5000 mPa·s or below. It is preferable that at 25°C, the silicone resin composition of the invention be in a solid state and have the melting point within the range of 40 to 150°C.

The silicone resin composition of the invention described above may be combined with various additives for imparting to the organic resin various properties such as resistance to heat, flame-retarding properties, water-repellant properties, or the like. Organic resins obtained by compounding with the silicone resin composition of the invention may constitute thermosetting resins or thermoplastic resins. The thermosetting resins can be exemplified by phenol resins, formaldehyde resins, xylene resins, xylene-formaldehyde resins, ketone-formaldehyde resins, furan resins, urea resins, imide resins, melamine resins, alkyd resins, unsaturated polyester resins, aniline resins, sulfonamide resins, silicone resins, epoxy resins, copolymer resins of the above, and mixtures of two or more of the above. The thermoplastic resins can be exemplified by polyethylenes composed of homopolymers or copolymers with α-olefins such as propylene, 1-butene, 1-pentene, 1-hexene, 4-methyl-1-pentene, etc.; low-density polyethylene, high-density polyethylene, super-high molecular-weight polyethylene, polypropylene, ethylene/propylene copolymer, etc.; olefin type resins composed of copolymers of the aforementioned α-olefin and other type of monomers such as vinyl acetates, methylmethacrylate, maleic acid, etc.; acrylic-type resins composed of homopolymers or copolymers of acrylic-type monomers such as acrylic acid, methacrylic acid; methylmethacrylate, butylmethacrylate, cyclohexylmethacrylate, 2-ethylcyclohexylmethacrylate, phenylmethacrylate, benzylinethacrylate, 2-hydroxyethylmethacrylate, glycidylmethacrylate, diethylaminoethyl methacrylate, or similar methacrylic acid esters; ethylene glycol methacrylate, trimethylol propane trimethacrylate, neopentylglycol dimethacrylate, or similar acrylic-type monomers of multifunctional methacrylates; other acrylic-type resins composed of copolymers of the aforementioned acrylic-type monomers and other type of monomers such as styrene, α-methylstyrene, or similar styrene-type monomers; vinyl acetate, vinyl chloride, vinylidene chloride, or similar vinyl-type monomers; phenylmaleimide, cyclohexylmaleimide, anhydrous maleimide, or similar maleimide-type monomers; halogenated vinyl-type resins such as polyvinyl chloride, polyvinylidene chloride, polyvinyl fluoride, polyvinylidene fluoride; styrene-type resins such as polystyrene, high-impact-resistant polystyrene, copolymers of acrylonitrile/butadiene/styrene (ABS resin), copolymer of acrylonitrile/styrene, copolymer of acrylonitrile/acrylic rubber/styrene, copolymer of acrylonitrile/ethylen-propylene rubber/styrene; polyester-type resins such as polyethyleneterephthalate, polyethylenenaphthalate, polyethyleneterephthalate/isophthalate, polybutyleneterephthalatelisophthalate, etc.; polyamide-type resins such as Nylon 6, Nylon 66, Nylon 6/66, Nylon 6/12, Nylon 610, Nylon 612, Nylon 11, Nylon 12, etc.; polyvinyl alcohol-type resins; polyoxyalkylene-type resins such as polyacetal, etc.; polycarbonate-type resins; polyvinylacetate-type resins; polysulfonic-type resins; polyethylenesulfone-type resins; polyarylenesulfide-type resins such as polyphenylenesulfide, etc.; polyarylene-type resins; polyimide-type resins; polyamide-imide-type resins; polyether-imide-type resins; polyether-ether-ketone-type resins; liquid crystal polyester-type resins; fluoro-type resins such as polytetrafluoroethylene, ethylene/tetrafluoroethylene/tetrafluoroethylene copolymer, etc.; styrene-type elastomers; olefin-type elastomers; urethane-type elastomers; fluoro-type elastomers; vinylchloride-type elastomers; polyamide-type elastomers; polyester-type elastomers; or other thermoplastic elastomer-type resins. The thermoplastic resins can be used in copolymers or mixtures of two or more of the above.

There are no special restrictions with regard to the amounts in which the silicone composition of the invention should be added to organic resins, but, in general, it can be added in an amount of 0.1 to 500 parts by weight, preferably 0.1 to 100 parts by weight, and even more preferably 0.5 to 50 parts by weight per 100 parts by weight of the organic resin.

The following is a more detailed description of the curable resin composition of the invention.

The curable resin of component (I) is one of main components of the composition. There are no special restrictions with regard to curability of this component. For example, this component may be curable by heating, irradiating with high-energy rays such as ultraviolet rays, contact with humid air, condensation-type curing, or an addition-reaction-type curing. Also, there are no restrictions with regard to the form of this component that can be liquid or solid at 25°C. This curable resin can be exemplified by the same resin as has been mentioned above such as epoxy resin, phenol resin, imide resin, or silicone epoxy-type resin.

There are no special restrictions with regard to the aforementioned epoxy resin provided that it contains glycidyl groups or alicyclic epoxy groups. The following resins are given as examples: o-cresol-novolac-type epoxy resin, phenol-novolac-type epoxy resin, biphenyl-type epoxy resin, biphenyl aralkyl-type epoxy resin, biphenyl-novolac-type resin, bisphenol A-type epoxy resin, bisphenol F-type epoxy resin, bisphenol AD-type epoxy resin, bisphenol S-type epoxy resin, dicyclopentadiene-type epoxy resin, naphthalene-type epoxy resin, anthracene-type epoxy resin, naptholaralkyl-type epoxy resin, polyvinylphenol-type epoxy resin, diphenylmethane-type epoxy resin, diphenylsulfonic-type epoxy resin, triphenolalkane-type epoxy resin, cresol-naphthol co-condensation-type epoxy resin, bisphenyl-ethylene-type epoxy resin, fluorene-type epoxy resin, stilbene-type epoxy resin, spiro-cumarone-type epoxy resin, norbomene-type epoxy resin, halogenated epoxy resin, imide-containing epoxy resin, maleimide-containing epoxy resin, allyl-modified epoxy resin, epoxy resin based on heavy oil and a pitch-type raw material. In order to improve water-repellant properties and to reduce the stress in a cured body, it may be recommended to use epoxy resins that contain silanes, polyallcylsiloxanes, or chemically bonded fluoroalkyl groups. Most preferable of the above are crystalline-type resins, biphenyl-type epoxy resins, bisphenol A-type epoxy resins, bisphenol F-type epoxy resins, stilbene-type epoxy resins, biphenyl ether-type epoxy resins, and biphenylsulfonic-type epoxy resins. The following are specific examples of the above resins:
biphenyl-type epoxy resin of the following general formula: 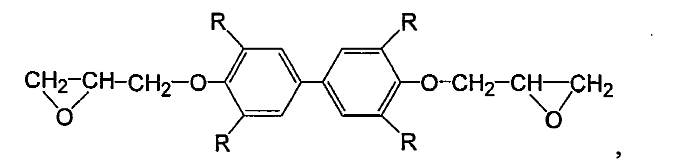
biphenyl-type epoxy resin of the following general formula: 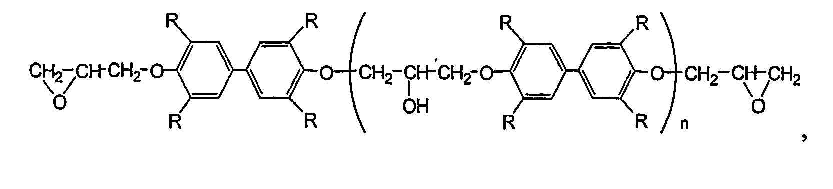
bisphenol A-type epoxy resin of the following general formula: 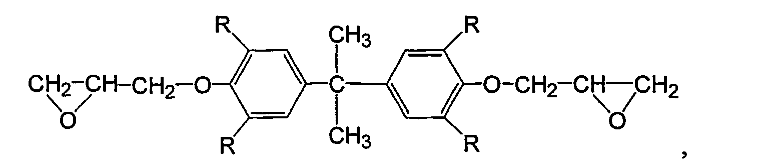
bisphenol F-type epoxy resin of the following general formula: 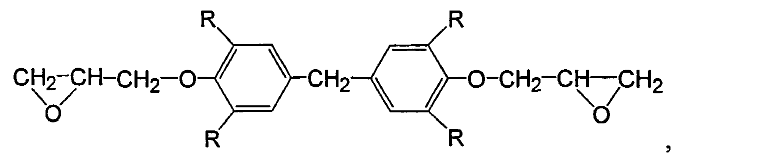
stilbene-type epoxy resin of the following general formula: 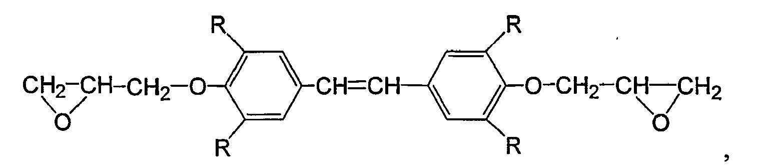
biphenylether-type epoxy resin of the following general formula: 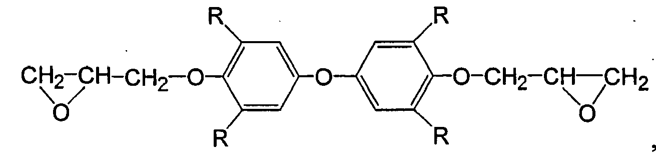 and
biphenylsulfonic-type epoxy resin of the following general formula:

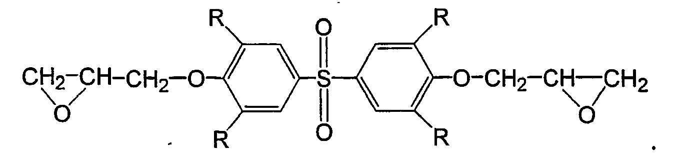

In the above formulae, R's may be the same or different and may designate hydrogen atoms or alkyl groups. R's as alkyl groups can be represented by methyl, ethyl, propyl, i-propyl, n-butyl, sec-butyl, and tert-butyl groups. In the above formulae, "n" is a positive integer. The crystalline-type epoxy resin can be exemplified by biphenyl-type epoxy resin that improves moldability of the composition and imparts flame resistance to a cured body of the composition. Such biphenyl-type epoxy resin can be exemplified by 4,4'-bis (2,3- epoxypropoxy) biphenyl, 4,4'-bis (2,3-epoxypropoxy)-3,3',5,5'-tetramethylbiphenyl, 4,4'-bis (2,3-epoxypropoxy)-3,3',5,5'-tetraethylbiphenyl, and 4,4'-bis (2,3-epoxypropoxy)-3,3',5,5'-tetrabutylbiphenyl. An example of the above resins may be a product (YX4000HK) commercially available, e.g., from Yuka-Shell Epoxy Co.

The following are specific examples of phenol resins: polyvinylphenol-type phenol resin, phenolnovolac-type phenol resin, cresolnovolac-type phenol resin, biphenol-type phenol resin, biphenolaralkyl-type phenol resin, naphthol-type phenol resin, terpene-type phenol resin, phenoldicyclopentadiene-type phenol resin, phenolaralkyl-type phenol resin, naphtholaralkyl-type phenol resin, triphenolalkane-type phenol resin, dicyclopentadiene-type phenol resin, cresol-naphthol co-condensation-type phenol resin, xylene-naphthol co-condensation-type phenol resin, phenol resin based on heavy oil or pitch-type raw material. In order to improve water-repellant properties and reduce stress in a cured body of the composition, it is recommended to use phenol resins having chemically bonded fluoroalkyl groups or combined with silanes or polyalkylsiloxanes. There are no restrictions with regard to the types of phenol resins which may be phenolaralkyl-type or phenol-type, naphthol-type, novolac-type, etc. From the viewpoint of improved flame-retarding properties in the cured body of the composition, the phenolaralkyl-type phenol resin is preferable. Such phenolaralkyl-type phenol resins can be represented by the following compounds:
phenolaralkyl-type phenol resin represented by the following general formula: 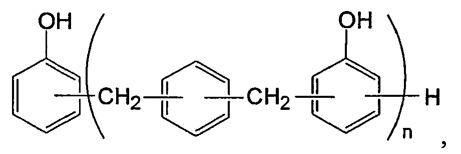
phenolaralkyl-type phenol resin represented by the following general formula: 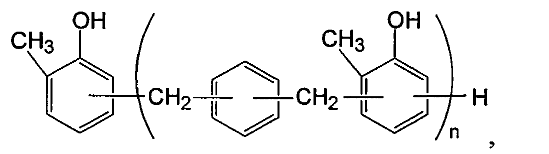
phenolaralkyl-type phenol resin represented by the following general formula: 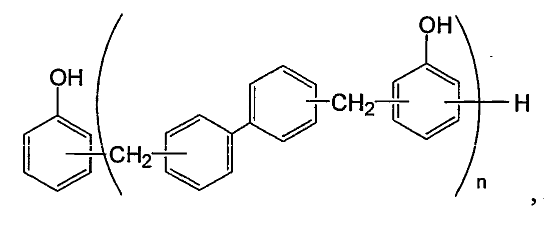 and
phenolaralkyl-type phenol resin represented by the following general formula:

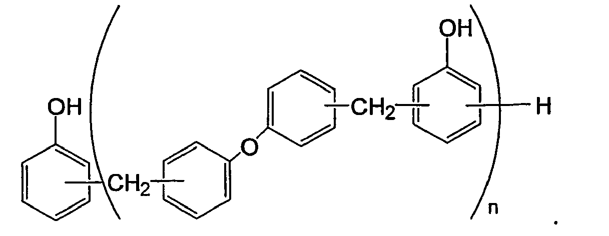

In the above formulae, "n" is a positive integer. An example of such phenolaralkyl-type resins is one commercially produced (XLC-3L) by Mitsui Chemicals, Inc.

Curable resin compositions may be compounded by combining epoxy and phenol resins. Epoxy resins suitable for such compounding may be comprised of crystalline phenol-type epoxy resins that are preferable for improving moldability of the composition, while phenol resins may be represented by phenolaralkyl-type phenol resin. There are no special restrictions with regard to the proportions in which epoxy and phenol resins can be combined, but it can be recommended to combine them in such a proportion that the ratio of epoxy-functional groups to phenol-functional groups be in the range of 0.5 to 2.5. Furthermore, the premixed epoxy and phenol resins can be further combined with component (II) during the mixing step of the process.

Component (II) is the aforementioned silicone resin composition that improves flame resistance of a cured body obtained by curing the curable resin composition without decreasing moldability. The aforementioned silicone resin compositions are the same as those mentioned above.

There are no special restrictions with regard to the amounts in which component (II) can be added to the curable resin composition of the invention. For example, it can be added in an amount of 0.1 to 500, preferably 0.1 to 100, and even more preferably 0.5 to 50 parts by weight per 100 parts by weight of component (I).

Within the limits that are not contradictory to the purposes of the invention, the composition of the invention may also be combined with some arbitrary components such as inorganic fillers (III). Examples of the aforementioned inorganic fillers (III) are the following: glass fiber, mineral fiber, alumina fiber, ceramic fiber that contains alumina and silica as components, boron fiber, zirconia fiber, silicon carbide fiber, metal fiber, or other fibrous filler; fused silica, crystalline silica, precipitated silica, fumed silica, baked silica, zinc oxide, baked clay, carbon black, glass beads, alumina, talc, calcium carbonate, clay, aluminum hydroxide, magnesium hydroxide, barium sulfate, titanium dioxide, aluminum nitride, boron nitride, silicon carbide, aluminum oxide, magnesium oxide, titanium oxide, beryllium oxide, kaolin, mica, zirconium, or other powdered fillers.
These fillers can be used in combinations of two or more. Although there are special restrictions with regard to the average particle size and shape of the particles of component (ITI), from the viewpoint of improved moldability, it is recommended to use spherical silica with an average particle size in the range of 0.1 to 40 µm.

There are no special restrictions with regard to the amounts in which component (III) can be used in the composition of the invention, but, in general, it can be recommended to add this component in an amount of 400 to 1200 parts by weight per 100 parts by weight of the sum of the components (I) and (II). If component (III) is added in an amount below the lower recommended limit, the cured resin will be obtained with an increased coefficient of thermal expansion, and either cracks will develop in such a material because of stress, or the flame-resistant properties will be impaired. If, on the other hand, the added amount exceeds the upper recommended limit, the moldability of the obtained composition will worsen.

In order to improve dispersibility of component (III) in component (I) or to improve affinity between component (I) and component (III), the composition may incorporate a coupling agent such as a silane coupling agent, titanate coupling agent, etc. The silane coupling agent can be exemplified by 3-glycidoxypropyltrimethoxysilane, 3-glycidoxypropylmethyldiethoxysilane, 2-(3,4-epoxycyclohexyl) ethyltrimethoxysilane, or similar epoxy-containing alkoxysilanes; N-(2-aminoethyl)-3-aminopropyltrimethoxysilane, 3-aminopropyltriethoxysilane, N-phenyl-3-aminopropyltrimethoxysilane, or similar amino-containing alkoxysilane; 3-mercaptopropyltrimethoxysilane, or similar mercapto-containing alkoxysilanes. The titanate-coupling agents can be exemplified by i-propoxytitanium tri(i-isostearate).

In order to accelerate curing of component (I), the composition of the invention may incorporate a curing-acceleration agent. Such an agent may be represented by triphenylphosphine, tributylphosphine, tri(p-methylphenyl) phosphine, tri(nonylphenyl) phosphine, triphenylphosphine-triphenylborate, tetraphenylphosphine-tetraphenylborate, or similar phosphorous-type compounds; triethylamine, benzyldimethylamine, α-methylbenzyldimethylamine, 1,8-diazobicyclo [5.4.0] undeca-7-ene, or similar tertiary amine compounds; 2-methylimidazole, 2-phenylimidazole, 2-phenyl-4-methylimidazole, or similar imidazol compounds.

If necessary, the composition of the invention may incorporate thermoplastic resins, thermoplastic elastomers, organic synthetic rubbers, silicone-type compounds, or similar stress-lowering agents; carnauba wax, higher fatty acids, synthetic waxes, or similar waxes; carbon black, or similar coloring agents; halogen-trapping agents, or the like.

There are no special restrictions with regard to the method which can be used for preparing the composition of the invention. The composition can be prepared by uniformly mixing component (I) and component (II) with other arbitrary components. When component (III) is used as an arbitrary component, it can be added to and mixed with component (I), and then the mixture can be combined with component (II) and with other arbitrary components and uniformly mixed therewith. In this case, a coupling agent can be added to components (I) and (III), and then the composition can be prepared by integral blending, or component (III) can be preliminarily surface-treated with the coupling agent and then combined with component (I). Equipment suitable for the preparation of the composition of the invention may be represented by a single-shaft or double-shaft-type continuous mixer, two-roll-type mill, Ross mixer®, and a kneader mixer.

The curable resin composition of the invention demonstrates excellent flowability prior to curing, and perfect flame-retarding properties in a cured resin obtained by curing the composition. Therefore, it can be used as an adhesive agent, a coating agent, a coating material, or a sealing resin composition for electrical and electronic parts and can be applied by transfer molding, injection molding, potting, casting, powder coating, dipping or dripping. The most suitable application for the curable resin composition of the invention is the sealing of semiconductor devices by means of a transfer press.

### Examples

The following is a more detailed description of the silicone resin composition, curable resin composition, and cured resin of the invention with reference to application examples. Values of viscosity given in the example were measured at 25°C. In the formulae, "Me" designates a methyl group, "Ph" designates a phenyl group, "Ep" designates a 3-glycidoxypropyl group, and "Pr" designates an isopropyl group.

The following methods were used for measuring characteristics of the silicone resin and silicone resin composition.
- Softening Point: This characteristic was determined as the temperature at which the tested material turned into liquid drops when it was heated in a micro-melting point apparatus of Yanagimoto factory with a heating rate of 1°C/min.
- Melt Viscosity: This characteristic was determined with the use of a programmable rheometer (Model DV-III, the product of Brookfield Co,. Inc., USA) by heating the silicone resin from room temperature with the heating rate of 2°C/min and defining the sought characteristic as a viscosity obtained after holding the sample for 20 min. at 100°C, 120°C and 140°C.
- Viscosity: This characteristic was measured with the use of a rotational viscometer (Model VG-DA, the product of Shibaura System Co., Ltd,), rotor : No. 4, rotational speed: 60 rpm.

Characteristics of the curable resin composition and of the cured resin obtained by curing the composition were also measured by the methods described below. The aforementioned composition was subjected to molding in a transfer press for 2 min. at a temperature of 175°C and under a pressure of 70 kgf/cm², and then the obtained product was post-cured for 5 hours at 180°C.

### [Moldability]

- Spiral Flow: The spiral flow was measured in accordance with the provisions of EMMI standard under conditions of 175°C and 70 kgf/cm².

### [Flame-Retarding Properties]

- LOI (limited oxygen index) : The lowest oxygen concentration required for burning of a specimen having a thickness of 1/16 inch (about 1.6 mm) was measured with the use of an oxygen-index tester in accordance with JIS K 7201 (Testing Method for Flammability of Polymeric Materials Using Oxygen Index Method). The concentration was determined as an average value obtained on 5 specimens.
- Burning Time: Burning time ( in seconds) was measured as an average value for 5 specimens having a thickness of 1/16 inch (about 1.6 mm). The test was carried out in accordance with UL94 Standard (Underwriters Laboratory, Inc., USA: Standard for Testing Flammability of Plastic Materials for Parts and Appliances).

### [Reference Example 1]

250 g of water and 400 g of toluene were loaded into a 2000 ml flask equipped with a thermometer and a reflux cooler, and while the contents were cooled in an icy bath, they was combined with a mixture of 300 g of phenyltrichlorosilane and 200 g of toluene added dropwise. Upon completion of the addition of the mixture, the contents were refluxed with heating for 6 hours, and then the toluene solution was separated. The toluene solution was washed with water, and the washing procedure was repeated till neutralization. The toluene was then removed via distillation by heating under reduced pressure. As a result, 177.7 g of a white solid substance were obtained.

116.0 g of the obtained white substance, 20.2 g of 3-glycidoxypropylmethyl dimethoxysilane, 19.1 g of dimethyldimethoxysilane, 150 g of toluene, and 0.15 g of cesium hydroxide were loaded into a 500 ml flask equipped with a thermometer, a Dean-Stark trap, and a reflux condenser. The contents were then combined with 10.0 g of water, and heated. The obtained methanol and water were removed by distillation. Upon completion of distillation of water, the system was cooled, combined with another 10.0 g of water and heated. The obtained methanol and water were removed by distillation, and then refluxing with heating was carried out for 6 hours. After cooling, the system was neutralized by adding 0.08 g of acetic acid. The product was washed three times with 80 ml of water. The obtained toluene solution was poured into a 500 ml flask equipped with a Dean-Stark trap and was subjected to azeotropic removal. Impurities were removed by filtering. The toluene was removed via distillation by heating the filtrate in vacuum. The resulting product was comprised of 140 g of a colorless solid substance. The obtained substance had a weight-average molecular weight of 2600, a softening point of 73°C, and an epoxy equivalent of 1620. ²⁹Si-NMR spectral analysis confirmed that the substance was comprised of a silicone resin represented by the following average unit formula:

(PhSiO_{3/2})_{0.78}(Me₂SiO_{2/2})_{0.14}(EpMeSiO_{2/2})_{0.08.}

Relative to the total content of the silicon-bonded organic group, the aforementioned silicone resin contained 7 mole % of 3-glycidoxypropyl groups and 64 mole % of phenyl groups.

### [Reference Example 2]

A silicone resin of the following average unit formula:

(PhSiO_{3/2})_{0.67}(Me₂SiO_{2/2})_{0.33}(MeO_{1/2})_{0.74}

having a weight-average molecular weight of 1200 and a viscosity of 120 mPa·s was obtained by causing a co-hydrolysis and condensation reaction between phenyltrimethoxysilane and dimethyldimethoxysilane.

### [Practical Example 1]

After dissolving 19.0 parts by weight of the silicone resin obtained in Reference Example 1 in 100 parts by weight of toluene in a four-neck flask, the solution was mixed with 1.0 part by weight of 3-glycidoxypropyltrimethoxysilane. The solvent was removed at 110°C/10 mmHg, and a solid silicone resin composition was obtained. The melt viscosity and appearance of the obtained silicone resin composition are given in Table 1.

### [Practical Example 2]

After dissolving 18.0 parts by weight of the silicone resin obtained in Reference Example 1 in 100 parts by weight of toluene in a four-neck flask, the solution was mixed with 2.0 part by weight of 3-glycidoxypropyltrimethoxysilane. The solvent was removed at 110°C/10 mmHg, and a solid silicone resin composition was obtained. The melt viscosity and appearance of the obtained silicone resin composition are given in Table 1.

### [Comparative Example 1]

Melt viscosity and appearance of the silicone resin obtained in Reference Example 1 are given in Table 1.

### [Comparative Example 2]

19 parts by weight of the silicone resin obtained in Reference Example 1 and 1 part by weight of the silicone resin obtained in Reference Example 2 were mixed for 5 min. at 120°C in a 30 ml kneader-mixer (Brabender mixer of Toyo Seiki Mfg. Co., Ltd.). After cooling at room temperature, a silicone resin composition was prepared. The viscosity and appearance of the obtained composition are given in Table 1.

**[Table 1]**

| | Example No. | Practical Example 1 | Practical Example 2 | Comparative Example 1 | Comparative Example 2 |
|---|---|---|---|---|---|
| Properties | | | | | |
| Melt Viscosity (mPa·s) | | | | | |
| | 100°C | 1.5 x 10⁴ | 1900 | 45.2 x 10⁴ | 2.4 x 10⁴ |
| | 120°C | 3400 | 670 | 6.2 x 10⁴ | 5800 |
| | 140°C | 1400 | - | 1.3 x 10⁴ | 2100 |
| Appearance | | Uniformly | Uniformly | Uniformly | Uniformly |
| | | transparent | transparent | transparent | transparent |

### [Practical Example 3]

27.5 g of an aromatic polycarbonate resin (Taflon A1900 from Idemitsu Petrochemical Co., Ltd.) and 2.5 g of the silicone resin composition prepared in Practical Example 1 were mixed for 5 min. at 280°C in a 30-ml kneader-mixer (Brabender kneader-mixer from Toyo Seiki Mfg. Co., Ltd.), after which test specimens were fabricated in an injection molding machine. The limited oxygen index (LOI) of the specimens was measured in accordance with JIS K 7201 "Test Method for Determination of Burning Behavior of Plastics by Oxygen Index". The results are shown in Table 2.

### [Comparative Example 3]

The specimens were manufactured in the same manner as in Practical Example 3, with the exception that the silicone resin composition obtained in Reference Example 1 was used instead of the silicone resin composition of Practical Example 1. The limited oxygen index (LOI) was measured in the same manner as in Practical Example 3. The results are shown in Table 2.

**[Table 2]**

| | Example No. | Practical Example 3 | Comparative Example 3 |
|---|---|---|---|
| Properties | | | |
| LOI | | 35 | 32 |

### [Practical Example 4]

A curable epoxy resin composition was prepared by uniformly melt-mixing the following components in a hot two-roll mill: 42.0 parts by weight of a crystalline biphenyl-type epoxy resin (Epicoat YX4000H; a product of Yuka Shell Epoxy Co., Ltd.; epoxy equivalent number of 190; melting point of 105°C); 38.6 parts by weight of a phenolaralkyl-type phenol resin (the product of Milex XLC-3L from Mitsui Chemicals, Inc.; equivalent number of phenolic hydroxyl groups is 168; the mole ratio of phenolic hydroxyl groups in the phenol resin to epoxy group in the epoxy resin is 1.0); 18 parts by weight of the silicone resin composition obtained in Practical Example 1; 510 parts by weight of amorphous silica with an average particle size of 14 µm (FB-48X, a product of Denki Kagaku Kogyo Co., Ltd.; 0.4 parts by weight of carbon black; 1 part by weight 3-glycidoxypropyltrimethoxysilane; 0.9 parts by weight of carnauba wax; and 0.66 parts by weight of triphenylphosphine. The characteristics of the curable epoxy resin composition and cured resin made therefrom were measured. The results are shown in Table 3.

### [Practical Example 5]

A curable epoxy resin composition was prepared in the same manner as in Practical Example 4, except that the silicone resin composition obtained in Practical Example 2 was used instead of the silicone resin composition obtained in Practical Example 1. The characteristics of the curable epoxy resin composition and cured resin made therefrom were measured. The results are shown in Table 3.

### [Comparative Example 4]

. A curable epoxy resin composition was prepared in the same manner as in Practical Example 4, except that the silicone resin obtained in Reference Example 1 was used instead of the silicone resin composition obtained in Practical Example 1. The characteristics of the curable epoxy resin composition and cured resin made therefrom were measured. The results are shown in Table 3.

### [Comparative Example 5]

A curable epoxy resin composition was prepared in the same manner as in Practical Example 4, except that the silicone resin obtained in Comparative Example 1 was used instead of the silicone resin composition obtained in Practical Example 1. The characteristics of the curable epoxy resin composition and cured resin made therefrom were measured. The results are shown in Table 3.

**[Table 3]**

| | Example No. | Practical Example 4 | Practical Example 5 | Comparative Example 4 | Comparative Example 5 |
|---|---|---|---|---|---|
| Properties | | | | | |
| Spiral flow | (mm) | 34 | 37 | 28 | 30 |
| LOI | | 46 | 46 | 37 | 43 |
| Burning time | (sec.) | 14 | 13 | 16 | ≥40 |

### Industrial Applicability

The silicone resin composition of the present invention is characterized by low melt viscosity and excellent reactivity and dispersibility in organic resins. The composition can be added to various organic resins for imparting to them excellent flame retardant properties without impairing moldability of the composition. The curable organic resin composition of the invention is free of antimony oxides or halogenated epoxy resins. Therefore, it does not produce harmful influence on the human body or the environment and possesses superior flame retardant properties.

## Claims

1. A silicone resin composition comprising a mixture or a reaction mixture of the following components:
(A) a silicone resin having a softening point above 25°C and represented by the following average unit formula:
(R¹SiO_{3/2})ₐ(R²₂SiO_{2/2})_{b}(R³₃SiO_{1/2})_{c}(SiO_{4/2})_{d}(XO_{1/2})ₑ
{where R¹, R², and R³ designate identical or different univalent hydrocarbon groups or epoxy-containing organic groups, of the total number of R¹, R², and R³ in the molecule, 0.1 to 40 mole % comprises epoxy-containing organic groups and not less than 10 mole % comprises phenyl groups; X is hydrogen atom or an alkyl group; "a" is a positive number, "b" is 0 or a positive number; "c" is 0 or a positive number; "d" is 0 or a positive number; "e" is 0 or a positive number; "b/a" is a number within the range of 0 to 10; "c/a" is a number within the range of 0 to 0.5; "d/(a+b+c+d)" is a number within the range of 0 to 0.3; and "e/(a+b+c+d)" is a number within the range of 0 to 0.4} and
(B) an epoxy-containing alkoxysilane.

2. The silicone resin composition of Claim 1, wherein the epoxy-containing organic group of component (A) is a glycidoxyalkyl group.

3. The silicone resin composition of Claim 1, wherein component (B) is 3-glycidoxypropyltrimethoxysilane.

4. The silicone resin composition of Claim 1, wherein component (B) is used in an amount of 0.15 to 100 parts by weight per 100 parts by weight of component (A).

5. A curable resin composition comprising (I) a curable resin and (II) the silicone resin composition of Claim 1.

6. The curable resin composition of Claim 5, wherein component (I) is an epoxy resin.

7. The curable resin composition of Claim 5, wherein component (I) is a crystalline epoxy resin.

8. The curable resin composition of Claim 5, wherein component (I) is a mixture of an epoxy resin with a phenol resin.

9. The curable resin composition of Claim 5, wherein component (I) is a mixture of a biphenyl-type epoxy resin with a phenolaralkyl-type epoxy resin.

10. The curable resin composition of Claim 5, wherein component (II) is used in an amount of 0.1 to 500 parts by weight per 100 parts by weight of component (I).

11. A cured resin obtained by curing a curable resin composition according to any of Claims 5 to 10.

## Patentansprüche

1. Eine Siliconharzzusammensetzung, enthaltend eine Mischung oder eine Reaktionsmischung der folgenden Komponenten:
(A) ein Siliconharz mit einem Erweichungspunkt oberhalb von 25°C und dargestellt durch die folgende mittlere Einheitsformel:
(R¹SiO_{3/2})ₐ(R²₂SiO_{2/2})_{b}(R³₃SiO_{1/2})_{c}(SiO_{1/2})_{d}(SiO_{1/2})ₑ
{wobei R¹, R² und R³ identische oder unterschiedliche einbindige Kohlenwasserstoffgruppen oder epoxyhaltige organische Gruppen bezeichnen, wobei von der Gesamtzahl von R¹, R² und R³ in dem Molekül 0,1 bis 40 Mol-% epoxyhaltige organische Gruppen umfassen und nicht weniger als 10 Mol-% Phenylgruppen umfassen; X ein Wasserstoffatom oder eine Alkylgruppe ist; "a" eine positive Zahl ist, "b" gleich 0 oder eine positive Zahl ist; "c" gleich 0 oder eine positive Zahl ist; "d" gleich 0 oder eine positive Zahl ist; "e" gleich 0 oder eine positive Zahl ist; "b/a" eine Zahl innerhalb des Bereiches von 0 bis 10 ist; "c/a" eine Zahl innerhalb des Bereiches von 0 bis 0,5 ist; "d/(a+b+c+d)" eine Zahl innerhalb des Bereiches von 0 bis 0,3 ist und "e/(a+b+c+d)" eine Zahl innerhalb des Bereiches von 0 bis 0,4 ist} und
(B) ein epoxyhaltiges Alkoxysilan.

2. Die Siliconharzzusammensetzung gemäß Anspruch 1, wobei die epoxyhaltige organische Gruppe der Komponente (A) eine Glycidoxyalkylgruppe ist.

3. Die Siliconharzzusammensetzung gemäß Anspruch 1, wobei die Komponente (B) 3-Glycidoxypropyltrimethoxysilan ist.

4. Die Siliconharzzusammensetzung gemäß Anspruch 1, wobei die Komponente (B) in einer Menge von 0,15 bis 100 Gewichtsteilen pro 100 Gewichtsteile der Komponente (A) verwendet wird.

5. Eine härtbare Harzzusammensetzung, enthaltend (I) ein härtbares Harz und (II) die Siliconharzzusammensetzung gemäß Anspruch 1

6. Die härtbare Harzzusammensetzung gemäß Anspruch 5, wobei die Komponente (I) ein Epoxyharz ist.

7. Die härtbare Harzzusammensetzung gemäß Anspruch 5, wobei die Komponente (I) ein kristallines Epoxyharz ist.

8. Die härtbare Harzzusammensetzung gemäß Anspruch 5, wobei die Komponente (I) eine Mischung eines Epoxyharzes mit einem Phenolharz ist.

9. Die härtbare Harzzusammensetzung gemäß Anspruch 5, wobei die Komponente (I) eine Mischung eines Epoxyharzes vom Biphenyltyp mit einem Epoxyharz vom Phenolaralkyltyp ist.

10. Die härtbare Harzzusammensetzung gemäß Anspruch 5, wobei die Komponente (II) in einer Menge von 0,1 bis 500 Gewichtsteilen pro 100 Gewichtsteile der Komponente (I) verwendet wird.

11. Ein gehärtetes Harz, erhalten durch Härten einer härtbaren Harzzusammensetzung gemäß einem der Ansprüche 5-10.

## Revendications

1. Composition de résine de silicone comprenant un mélange ou un mélange de réaction des composants suivants :
(A) une résine de silicone ayant un point de ramollissement supérieur à 25 °C et représentée par la formule unitaire moyenne suivante :
(R¹SiO_{3/2})ₐ(R²₂SiO_{2/2})_{b}(R³₃SiO_{1/2})c(SiO_{4/2})d(XO_{1/2})ₑ
{où R¹, R² et R³ désignent des groupes hydrocarbure univalents identiques ou différents ou des groupes organiques contenant de l'époxy, du nombre total de R¹, R² et R³ dans la molécule, 0,1 à 40 % en mole comprennent des groupes organiques contenant de l'époxy et pas moins de 10 % en mole comprennent des groupes phényle ; X est un atome d'hydrogène ou un groupe alkyle ; « a » est un nombre positif, « b » est 0 ou un nombre positif ; « c » est 0 ou un nombre positif ; « d » est 0 ou un nombre positif ; « e » est 0 ou un nombre positif ; « b/a » est un nombre dans la gamme de 0 à 10 ; « c/a » est un nombre dans la gamme de 0 à 0,5 ; « d/(a + b + c + d) » est un nombre dans la gamme de 0 à 0,3 ; et « e/(a + b + c + d) » est un nombre dans la gamme de 0 à 0,4} et
(B) un alcoxysilane contenant de l'époxy.

2. Composition de résine de silicone selon la revendication 1, dans laquelle le groupe organique contenant de l'époxy du composant (A) est un groupe glycidoxyalkyle.

3. Composition de résine de silicone selon la revendication 1, dans laquelle le composant (B) est du 3-glycidoxypropyltriméthoxysilane.

4. Composition de résine de silicone selon la revendication 1, dans laquelle le composant (B) est utilisé en une quantité de 0,15 à 100 parties en poids pour 100 parties en poids de composant (A).

5. Composition de résine durcissable comprenant (I) une résine durcissable et (II) la composition de résine de silicone selon la revendication 1.

6. Composition de résine durcissable selon la revendication 5, dans laquelle le composant (I) est une résine époxy.

7. Composition de résine durcissable selon la revendication 5, dans laquelle le composant (I) est une résine époxy cristalline.

8. Composition de résine durcissable selon la revendication 5, dans laquelle le composant (I) est un mélange d'une résine époxy et d'une résine phénolique.

9. Composition de résine durcissable selon la revendication 5, dans laquelle le composant (I) est un mélange d'une résine époxy de type biphényle et d'une résine époxy de type phénolaralkyle.

10. Composition de résine durcissable selon la revendication 5, dans laquelle le composant (II) est utilisé en une quantité de 0,1 à 500 parties en poids pour 100 parties en poids de composant (I).

11. Résine durcie obtenue par durcissement d'une composition de résine durcissable selon l'une quelconque des revendications 5 à 10.
